# EUROPÄISCHE PATENTANMELDUNG

(11) **EP 3 723 238 A1**
(43) Veröffentlichungstag der Anmeldung: **14.10.2020**
(21) Anmeldenummer: 19168656.7
(22) Anmeldetag: 11.04.2019
(51) Int. Cl.: H02J 13/00, G05B 19/406, H02K 29/06, H02H 1/00

(54) **ELEKTRISCHE ANLAGE**

(71) Anmelder: Siemens Aktiengesellschaft, 80333 München (DE)
(72) Erfinder: Hegmann, Michael, 91126 Schwabach (DE); Bungert, Ulrich, 92348 Berg (DE)

(57) **Zusammenfassung**

Um einen Verkabelungsaufwand für eine elektrische Anlage zu reduzieren wird eine elektrische Anlage (1) mit einem elektrischen Betriebsmittel (2), einer Schnittstelle (3) und einer mit der Schnittstelle (3) verbundenen Übertragungsleitung (4) zur Übertragung von elektrischer Leistung und/oder wenigstens eines Datensignals zwischen einer Steuereinheit (5, 5') und der Schnittstelle (3) angegeben. Die Schnittstelle (3) ist zur Kopplung mit einem Sicherheitssensor (6) eingerichtet, um ein Sensorsignal zu erhalten und dazu, mittels der Übertragungsleitung (4) und in Abhängigkeit von dem Sensorsignal ein Sicherheitssignal an die Steuereinheit (5, 5') zu übertragen.

## Beschreibung

Die Erfindung betrifft eine elektrische Anlage mit einem elektrischen Betriebsmittel, einer an dem Betriebsmittel angeordneten Schnittstelle und einer mit der Schnittstelle verbundenen Übertragungsleitung zur Übertragung von elektrischer Leistung und/oder wenigstens eines Datensignals zwischen einer Steuereinheit und der Schnittstelle.

Die Betrachtung der funktionalen Sicherheit und Integration entsprechender Produkte ist ein wesentlicher Bestandteil bei der Einrichtung und Verwendung von Maschinen und Anlagen. Der Einsatz von sicherheitsgerichteten Sensoren, beispielsweise Not-Halt Tastern oder anderen Systemen zum Schutz von Personen, Maschinen oder und Umwelt, und die damit verbundenen lokalen Sicherheitskonzepte können zu erhöhten Verkabelungsaufwänden vor Ort führen. Dies führt zu erhöhtem Zeitbedarf bei der Installation und Inbetriebnahme der Anlagen, zu einer erhöhten Fehleranfälligkeit des Gesamtsystems, insbesondere bei einer Verkabelung über große Strecken und, einem erhöhten Wartungsaufwand. Diese Aspekte sowie Materialkosten für die Verkabelung selbst führen außerdem zu erhöhten Kosten.

Vor diesem Hintergrund ist es eine Aufgabe der vorliegenden Erfindung ein verbessertes Konzept für eine elektrische Anlage anzugeben, welches einen Verkabelungsaufwand eines Betriebsmittels der elektrischen Anlage reduziert.

Erfindungsgemäß wird diese Aufgabe durch den unabhängigen Patentanspruch gelöst. Vorteilhafte Weiterbildungen und weitere Ausführungsformen sind Gegenstand der abhängigen Patentansprüche.

Das verbesserte Konzept beruht auf der Idee, in unmittelbarer Umgebung zu einem elektrischen Betriebsmittel der elektrischen Anlage eine Schnittstelle vorzusehen, die einerseits mit einem Sicherheitssensor gekoppelt werden kann und andererseits mit einer Übertragungsleitung zwischen dem Betriebsmittel und einer Steuereinheit, wobei die Übertragungsleitung ein Sicherheitssignal zusätzlich zu elektrischer Leistung und/oder wenigstens einem Datensignal überträgt.

Gemäß einem ersten unabhängigen Aspekt des verbesserten Konzepts wird eine elektrische Anlage mit einem elektrischen Betriebsmittel angegeben. Die elektrische Anlage weist eine an dem Betriebsmittel angeordnete Schnittstelle sowie eine mit der Schnittstelle verbundene Übertragungsleitung auf, wobei die Übertragungsleitung zur Übertragung von elektrischer Leistung, insbesondere zum Betrieb oder zur Leistungsversorgung des elektrischen Betriebsmittels, und/oder wenigstens eines Datensignals, beispielsweise zur Steuerung und/oder Regelung des Betriebsmittels und/oder als Rückkopplungssignal von dem Betriebsmittel, zwischen einer Steuereinheit und der Schnittstelle dient. Die Schnittstelle ist zur Kopplung mit einem Sicherheitssensor eingerichtet oder mit dem Sicherheitssensor gekoppelt, insbesondere drahtgebunden oder drahtlos gekoppelt, um ein Sensorsignal zu erhalten, insbesondere von dem Sicherheitssensor. Die Schnittstelle ist dazu eingerichtet, mittels der Übertragungsleitung und in Abhängigkeit von dem Sensorsignal ein Sicherheitssignal an die Steuereinheit zu übertragen.

Das Sicherheitssignal kann insbesondere das Sensorsignal beinhalten oder ein von dem Sensorsignal abhängiges oder abgeleitetes Signal.

Dass die Schnittstelle dazu eingerichtet ist, das Sicherheitssignal an die Steuereinheit zu übertragen, kann derart verstanden werden, dass die Schnittstelle das Sensorsignal an die Steuereinheit mittels der Übertragungsleitung weiterleitet.

Alternativ oder zusätzlich kann die Schnittstelle dazu eingerichtet sein, abhängig von dem Sensorsignal und/oder von weiteren Sensorsignalen, das Sicherheitssignal zu erzeugen und an die Steuereinheit zu übertragen.

Alternativ oder zusätzlich kann die Schnittstelle dazu eingerichtet sein, das Sensorsignal an eine Verarbeitungseinheit zu übertragen, wobei die Verarbeitungseinheit dazu eingerichtet ist, das Sensorsignal zu verarbeiten um das Sicherheits-signal zu erhalten und die Verarbeitungseinheit oder die Schnittstelle dazu eingerichtet ist, das Sicherheitssignal an die Steuereinheit zu übertragen.

Bei dem Sicherheitssensor handelt es sich insbesondere um eine Vorrichtung, welche das Vorliegen eines sicherheitsrelevanten Ereignisses oder eines sicherheitsrelevanten Zustands des elektrischen Betriebsmittels oder das elektrische Betriebsmittel betreffend oder einen Benutzer oder Passanten des elektrischen Betriebsmittels betreffend erkennen kann und basierend darauf das Sensorsignal erzeugen kann.

Das sicherheitsrelevante Ereignis kann beispielsweise das Vorhandensein eines Objekts in einem vorgegebenen Raumbereich und/oder das Überschreiten eines oder mehrerer Parameter, welche insbesondere das elektrische Betriebsmittel betreffen, beinhalten. Die Parameter können beispielsweise eine Temperatur einer Komponente des elektrischen Betriebsmittels, beispielsweise einer Isolationsflüssigkeit, eine Umgebungstemperatur, eine Stromstärke, eine Spannung oder dergleichen beinhalten. Das sicherheitsrelevante Ereignis kann auch das Berühren oder Auslösen oder Aktivieren einer Komponente des elektrischen Betriebsmittels oder des Sicherheitssensors durch eine Person beinhalten.

Der Sicherheitssensor kann beispielsweise einen Not-Halt Taster, einen Positionsschalter, einen Positionssensor, einen optischen Sensor, einen Näherungssensor, eine Lichtschranke, ein Kamerasystem, einen taktilen Sensor, eine Sicherheitsschaltmatte, einen Stromsensor, einen Spannungssensor oder einen Temperatursensor beinhalten.

Dass die Schnittstelle an dem Betriebsmittel angeordnet ist, kann beispielsweise derart verstanden werden, dass die Schnittstelle an dem Betriebsmittel, beispielsweise einem Gehäuse des Betriebsmittels, oder in dem Betriebsmittel, insbesondere innerhalb des Gehäuses des Betriebsmittels, mechanisch befestigt ist, insbesondere unmittelbar an oder in dem Betriebsmittel mechanisch befestigt ist. Dabei kann die Schnittstelle beispielsweise ein Gehäuse aufweisen, welches mechanisch mit dem Betriebsmittel bzw. dessen Gehäuse, verbunden ist.

Dass die Schnittstelle an dem Betriebsmittel angeordnet ist, kann auch bedeuten, dass die Schnittstelle sich in einer unmittelbaren Umgebung des Betriebsmittels befindet. Beispielsweise kann sich die Schnittstelle näher an dem elektrischen Betriebsmittel befinden als die Steuereinheit. Beispielsweise kann ein Abstand zwischen dem Betriebsmittel und der Steuereinheit größer als ein Abstand zwischen dem Betriebsmittel und der Schnittstelle sein, beispielsweise mindestens um einen Faktor zehn oder einen Faktor 100 größer.

Dass die Schnittstelle zur Kopplung mit dem Sicherheitssensor eingerichtet ist, kann derart verstanden werden, dass die Schnittstelle drahtlos oder drahtgebunden mit dem Sicherheitssensor verbunden werden kann, sodass das Sensorsignal von dem Sicherheitssensor an die Schnittstelle übertragen werden kann.

Die Übertragungsleitung kann beispielsweise ein Kabel, insbesondere ein mehradriges Kabel, und/oder einen Kommunikationsbus beinhalten.

Die Übertragungsleitung dient insbesondere zur Übertragung der elektrischen Energie und/oder des wenigstens einen Datensignals von der Steuereinheit zu der Schnittstelle und weiter zum Betriebsmittel und/oder des wenigstens einen Datensignals von dem Betriebsmittel über die Schnittstelle an die Steuereinheit.

Die Steuereinheit ist insbesondere zur Steuerung und/oder Regelung des elektrischen Betriebsmittels, insbesondere eines Motors, insbesondere eines elektrischen Motors, des elektrischen Betriebsmittels eingerichtet. Das wenigstens eine Datensignal kann beispielsweise ein Steuersignal zur Steuerung und/oder Regelung des elektrischen Betriebsmittels oder ein Rückkopplungssignal oder Gebersignal von dem elektrischen Betriebsmittel an die Steuereinheit beinhalten.

Die Steuereinheit kann beispielsweise einen oder mehrere Umrichter, insbesondere Motorumrichter, beinhalten.

Die Steuereinheit kann beispielsweise in einem Schaltschrank angeordnet sein.

In einer elektrischen Anlage nach dem verbesserten Konzept wird die Übertragungsleitung sowohl für die Übertragung der elektrischen Energie und/oder des Datensignals einerseits als auch für die Übertragung des Sicherheitssignals andererseits verwendet. Es ist daher nicht erforderlich, eine separate Leitung zwischen dem Sicherheitssensor und der Steuereinheit vorzusehen um das Sicherheitssignal zu übertragen. Dadurch werden zum einen Kosten für die separate Leitung vermieden zum anderen entfällt auch ein entsprechender Installations-, Wartungs- und Diagnoseaufwand. Auch eine Fehleranfälligkeit der elektrischen Anlage wird reduziert.

Besonders vorteilhaft wirken sich die Vorteile des verbesserten Konzepts im Kontext einer klassischen Aufbautechnik von elektrischen Maschinen oder elektrischen Anlagen aus, bei denen ein zentraler Schaltschrank mit der Steuereinheit und/oder weiteren Steuereinheiten mit einer Vielzahl von über die elektrische Anlage verteilten elektrischen Betriebsmitteln gekoppelt ist und es so zu großen Leitungslängen zwischen dem Betriebsmittel und dem Schaltschrank kommt. Diese Leitungslängen können einfach gegebenenfalls mehrere Meter bis hin zu mehreren Hundert Metern betragen. Daher wirkt sich die Einsparung zusätzlicher Verkabelung hier signifikant aus.

Gemäß zumindest einer Ausführungsform der elektrischen Anlage sind die Steuereinheit und das elektrische Betriebsmittel räumlich getrennt und entfernt voneinander. Eine Entfernung zwischen der Steuereinheit und dem elektrischen Betriebsmittel beträgt vorzugsweise mehr als 5 m, mehr als 10 m, mehr als 20 m oder mehr als 100 m.

Insbesondere besteht in verschiedenen Ausführungsformen, abgesehen von einer möglichen mechanischen Verbindung durch die Übertragungsleitung, keine weitere mechanische Verbindung zwischen der Steuereinheit und dem elektrischen Betriebsmittel.

Gemäß zumindest einer Ausführungsform enthält das elektrische Betriebsmittel einen elektrischen Motor. Die Schnittstelle ist an dem Motor angeordnet. Die übertragene elektrische Leistung dient zur Versorgung des elektrischen Motors und/oder das wenigstens eine Datensignal enthält ein Steuersignal für den Motor oder ein oder Rückkopplungs- oder Gebersignal von dem Motor an die Steuereinheit.

Gemäß zumindest einer Ausführungsform beinhaltet die elektrische Anlage ein Gerät oder eine Maschine, welche mittels des Motors angetrieben werden kann oder die elektrische Anlage beziehungsweise das elektrische Betriebsmittel ist mit solch einem Gerät oder einer solchen Maschine verbindbar.

Gemäß zumindest einer Ausführungsform dient der Motor dem Betrieb einer energietechnischen Anlage, beispielsweise eines Transformators oder eines Leistungsschutzschalters, oder einer Industrieanlage oder einer Fertigungsanlage.

Gemäß zumindest einer Ausführungsform enthält die Schnittstelle eine Abzweigdose oder einen Klemmkasten zur Verbindung der Übertragungsleitung mit dem elektrischen Betriebsmittel, insbesondere dem Motor.

Gemäß zumindest einer Ausführungsform beinhaltet die elektrische Anlage den Sicherheitssensor und der Sicherheitssensor ist dazu eingerichtet, ein sicherheitsrelevantes Ereignis zu erkennen oder zu detektieren und abhängig von dem sicherheitsrelevanten Ereignis, insbesondere bei Vorliegen des sicherheitsrelevanten Ereignisses, das Sensorsignal zu erzeugen.

Der Sicherheitssensor kann dabei dazu eingerichtet sein, das sicherheitsrelevante Ereignis selbsttätig, insbesondere ohne Einwirkung durch eine Person, zu erkennen und/oder eine Betätigung oder Berührung einer Benutzerschnittstelle, beispielsweise eines Tasters, des Sicherheitssensors durch eine Person als sicherheitsrelevantes Ereignis zu erkennen.

Gemäß zumindest einer Ausführungsform ist der Sicherheitssensor in einer unmittelbaren Umgebung zu dem Betriebsmittel angeordnet, insbesondere ist der Abstand zwischen dem Betriebsmittel und der Steuereinheit größer als ein Abstand zwischen dem Betriebsmittel und dem Sicherheitssensor, beispielsweise um mindestens um einen Faktor 10 oder 100 größer.

Gemäß zumindest einer Ausführungsform weist der Sicherheitssensor einen Not-Halt Taster auf, der bei Betätigung das Sensorsignal erzeugt.

Gemäß zumindest einer Ausführungsform weist der Sicherheitssensor einen Positionsschalter auf, wobei der Positionsschalter an dem Betriebsmittel angeordnet ist, um eine Position einer Komponente, beispielsweise einer Türe oder Schutztüre, des Betriebsmittels zu detektieren und abhängig davon das Sensorsignal zu erzeugen.

Der Positionsschalter wird beispielsweise bei einer vorgegebenen Position oder Positionsänderung einer Komponente des Betriebsmittels ausgelöst, wobei es sich bei der Komponente um eine Tür, Schutztür oder eine Welle des Betriebsmittels oder des Motors oder eines Gehäuses des Betriebsmittels handeln kann.

Gemäß zumindest einer Ausführungsform weist der Sicherheitssensor einen Stromsensor auf, der einen Strom des Betriebsmittels detektieren und abhängig davon das Sensorsignal erzeugen kann.

Gemäß zumindest einer Ausführungsform weist der Sicherheitssensor einen Spannungssensor auf, der eine Spannung des Betriebsmittels detektieren und abhängig davon das Sensorsignal erzeugen kann.

Gemäß zumindest einer Ausführungsform weist der Sicherheitssensor einen Temperatursensor auf, der eine Temperatur des Betriebsmittels oder einer Umgebung des Betriebsmittels detektieren und abhängig davon das Sensorsignal erzeugen kann.

Gemäß zumindest einer Ausführungsform weist der Sicherheitssensor einen Kraftsensor auf, der eine Kraft detektieren kann, die von einer Komponente des Betriebsmittels oder auf eine Komponente des Betriebsmittels ausgeübt wird, und abhängig davon das Sensorsignal erzeugen kann.

Gemäß zumindest einer Ausführungsform weist der Sicherheitssensor einen Drehmomentsensor auf, der ein Drehmoment detektieren kann, das von einer Komponente des Betriebsmittels oder auf die Komponente des Betriebsmittels ausgeübt wird, und abhängig davon das Sensorsignal erzeugen kann.

Der Kraft-, der Drehmoment-, der Strom-, der Spannungs- beziehungsweise der Temperatursensor kann beispielsweise eine Überschreitung eines jeweiligen vorgegebenen Schwellwertes durch eine entsprechende Messgröße detektieren und das Sensorsignal insbesondere bei Überschreitung des Schwellwertes erzeugen.

Gemäß zumindest einer Ausführungsform enthält die Übertragungsleitung wenigstens einen ersten Leiter zur Übertragung der elektrischen Leistung. Die Übertragungsleitung enthält wenigstens einen zweiten Leiter zur Übertragung des Sicherheitssignals.

Insbesondere sind der erste und der zweite Leiter in einem gemeinsamen Kabel.

Solche Ausführungsformen sind mit Vorteil besonders einfach ausgeführt und besonders kostengünstig, da zur Übertragung des Sicherheitssignals mit Ausnahme des zweiten Leiters keine zusätzlichen Komponenten zwingend vorgesehen sind.

In einer Ausführungsform enthält die Schnittstelle beispielsweise einen Klemmkasten oder eine Anschlussdose des elektrischen Betriebsmittels. Der Klemmkasten enthält dabei wenigstens eine erste Klemme zur Verbindung mit dem wenigstens einen ersten Leiter sowie wenigstens eine zweite Klemme zur Verbindung der Übertragungsleitung mit dem wenigstens einen zweiten Leiter. Der Sicherheitssensor kann beispielsweise mittels der wenigstens einen zweiten Klemme mit der Übertragungsleitung verbunden sein.

Gemäß zumindest einer Ausführungsform enthält die Übertragungsleitung den wenigstens einen Leiter zur Übertragung der elektrischen Leistung. Die Schnittstelle ist dazu eingerichtet, in Abhängigkeit von dem Sensorsignal ein Signal zur Übertragung der Leistung zu modulieren, um das Sicherheits-signal mittels des wenigstens einen ersten Leiters zu übertragen, insbesondere zu erzeugen und zu übertragen.

Das Sicherheitssignal wird in solchen Ausführungsformen also auf das Signal zur Übertragung der Leistung aufmoduliert. Das modulierte Signal enthält also in diesem Sinne das Signal zur Übertragung der Leistung und das Sicherheitssignal.

Mit Vorteil kann in solchen Ausführungsformen zur Übertragung des Sicherheitssignals auf bereits vorhandene oder ohnehin erforderliche Leiter zur Leistungsübertragung zurückgegriffen werden.

Dass das Sicherheitssignal auf das Signal zur Übertragung der Leistung moduliert wird, kann dabei derart verstanden werden, dass, falls Leistung von der Steuereinheit über den wenigstens einen ersten Leiter zu dem elektrischen Betriebsmittel übertragen wird, das Sicherheitssignal über den wenigstens einen ersten Leiter von der Schnittstelle zu der Steuereinheit übertragen wird. Zu Zeitpunkten, zu denen keine Leistung übertragen wird, kann dennoch das Sicherheitssignal über den wenigstens einen ersten Leiter von der Schnittstelle zu der Steuereinheit übertragen werden.

Gemäß zumindest einer Ausführungsform enthält die Schnittstelle den Klemmkasten und einen Kommunikationsschaltkreis zur Modulation des Signals zur Übertragung der Leistung.

In solchen Ausführungsformen kann insbesondere der Kommunikationsschaltkreis eine sichere Übertragung des Sicherheitssignals zwischen der Schnittstelle und der Steuereinheit gewährleisten.

Insbesondere ist der Kommunikationsschaltkreis dazu eingerichtet, das Signal zur Übertragung der Leistung zu modulieren um das Sicherheitssignal zu übertragen.

Gemäß zumindest einer Ausführungsform weist die Steuereinheit einen weiteren Kommunikationsschaltkreis auf, der dazu eingerichtet ist, das modulierte Signal zur Übertragung der Leistung zu demodulieren, um das Sicherheitssignal zu erhalten.

Gemäß zumindest einer Ausführungsform ist der weitere Kommunikationsschaltkreis dazu eingerichtet, ein Steuersignal zur Steuerung und/oder Regelung des elektrischen Betriebsmittels an die Schnittstelle, insbesondere durch Modulation des Signals zur Übertragung der Leistung, zu übertragen.

Der Kommunikationsschaltkreis der Schnittstelle ist beispielsweise dazu eingerichtet, das entsprechende Signal zu demodulieren, um das Steuersignal zu erhalten.

Gemäß zumindest einer Ausführungsform enthält die Übertragungsleitung wenigstens einen dritten Leiter zur Übertragung des wenigstens einen Datensignals. Die Schnittstelle ist dazu eingerichtet, in Abhängigkeit von dem Sensorsignal das wenigstens eine Datensignal zu modulieren, um das Sicherheits-signal mittels des wenigstens einen dritten Leiters zu übertragen, insbesondere zu erzeugen und zu übertragen.

Gemäß zumindest einer Ausführungsform enthält das elektrische Betriebsmittel oder der elektrische Motor einen Geber, insbesondere Motorgeber, zur Steuerung und/oder Regelung des Motors. Der Geber ist insbesondere dazu eingerichtet, abhängig von einer Position einer Welle des Motors ein Rückkopplungs- oder Gebersignal zu erzeugen und mittels des wenigstens einen dritten Leiters an die Steuereinheit zu übertragen. Das wenigstens eine Datensignal weist das Rückkopplungssignal auf und die Schnittstelle ist dazu eingerichtet, das Sicherheits-signal auf das Rückkopplungssignal zu modulieren.

In solchen Ausführungsformen kann die Schnittstelle beispielsweise einen Geberanschluss des Gebers oder des Motors und/oder einen Geberschaltkreis aufweisen, wobei die Modulation des wenigstens einen Datensignals durch den Geberanschluss oder Geberschaltkreis erfolgt.

In solchen Ausführungsformen kann eine besonders sichere Datenübertragung, insbesondere durch die Modulation des Rücckopplungssignals und den Einsatz eines sicheren Kommunikationsprotokolls erreicht werden. Außerdem sind keine zusätzlichen Leiter zur Übertragung des Sicherheitssignals erforderlich.

Gemäß zumindest einer Ausführungsform weist die Übertragungsleitung einen Kommunikationsbus auf, welcher den wenigstens einen dritten Leiter enthält.

Gemäß zumindest einer Ausführungsform enthält das Betriebsmittel einen elektrischen Motor und einen Geber für den Motor. Der wenigstens eine dritte Leiter ist mit dem Geberanschluss des Motors oder des Gebers verbunden und das wenigstens eine Datensignal enthält ein von dem Geber oder Geberanschluss erzeugbares Gebersignal oder Rückkopplungssignal.

Der Geber kann insbesondere intern in dem Motor verbaut sein oder extern an dem Motor angebracht oder mit diesem gekoppelt sein.

Gemäß zumindest einer Ausführungsform, in der die Übertragungsleitung den wenigstens einen dritten Leiter zur Übertragung des wenigstens einen Datensignals aufweist, enthält die Übertragungsleitung den wenigstens einen ersten Leiter zur Übertragung der elektrischen Leistung.

In solchen Ausführungsformen sind der wenigstens eine dritte Leiter und der wenigstens eine erste Leiter also in der gemeinsamen Übertragungsleitung enthalten.

Gemäß zumindest einer Ausführungsform, in der die Übertragungsleitung den wenigstens einen dritten Leiter zur Übertragung des wenigstens einen Datensignals aufweist, weist die elektrische Anlage eine mit dem Betriebsmittel verbundene und von der Übertragungsleitung verschiedene Leistungsübertragungsleitung zur Übertragung der elektrischen Leistung auf.

Gemäß zumindest einer Ausführungsform enthält die Schnittstelle den Kommunikationsschaltkreis, wobei der Kommunikationsschaltkreis dazu eingerichtet ist, das Sicherheitssignal gemäß einem vorgegebenen Kommunikationsprotokoll, insbesondere einem Kommunikationsprotokoll zur sicheren Signalübertragung, zu erzeugen und zu übertragen.

Das Erzeugen und Übertragen des Sicherheitssignals kann dabei insbesondere mittels der Modulation des Signals zur Leistungsübertragung oder des wenigstens einen Datensignals erfolgen und über den wenigstens einen ersten oder den wenigstens einen dritten Leiter erfolgen.

Gemäß zumindest einer Ausführungsform ist der Kommunikationsschaltkreis dazu eingerichtet, das Sicherheitssignal, insbesondere gemäß dem Kommunikationsprotokoll, redundant zu erzeugen und zu übertragen. Dadurch wird eine erhöhte Sicherheit in der Datenübertragung ermöglicht.

Gemäß zumindest einer Ausführungsform enthält die elektrische Anlage zur Kopplung der Schnittstelle mit dem Sicherheitssensor einen ersten Übertragungspfad, um das Sensorsignal von dem Sicherheitssensor zu erhalten. Die elektrische Anlage enthält außerdem einen zweiten Übertragungspfad zur Kopplung der Schnittstelle mit dem Sicherheitssensor, um ein weiteres Sensorsignal zu erhalten, welches redundant zu dem Sensorsignal ist.

Das weitere Sensorsignal wird mittels der Übertragungsleitung insbesondere parallel und redundant zu dem Sensorsignal an die Steuereinheit übertragen.

Die redundante Übertragung kann beispielsweise beinhalten, dass das weitere Sensorsignal gleich dem invertierten Sensorsignal ist.

Gemäß zumindest einer Ausführungsform enthält jeder der Übertragungspfade wenigstens zwei elektrische Leiter, insbesondere um jeweils eine bidirektionale Kommunikation zu ermöglichen.

Gemäß zumindest einer Ausführungsform enthält die elektrische Anlage die Steuereinheit. Die Steuereinheit ist dazu eingerichtet, in Abhängigkeit von dem Sensorsignal eine Sicherheitsmaßnahme einzuleiten.

Die Sicherheitsmaßnahme kann dabei ein Steuern und/oder Regeln des Betriebsmittels oder des Motors beinhalten, um das Betriebsmittel oder den Motor sicher zum Stillstand oder in einen sicheren Zustand zu bringen.

Die Sicherheitsmaßnahme kann alternativ oder zusätzlich das Erzeugen und Ausgeben eines optischen, akustischen und/oder haptischen Warn- oder Alarmsignals beinhalten.

Gemäß zumindest einer Ausführungsform weist die elektrische Anlage ein weiteres elektrisches Betriebsmittel auf, sowie eine an dem weiteren Betriebsmittel angeordnete weitere Schnittstelle. Die elektrische Anlage weist eine mit der weiteren Schnittstelle verbundene weitere Übertragungsleitung zur Übertragung von elektrischer Leistung, insbesondere zur Leistungsversorgung oder zum Betrieb des weiteren Betriebsmittels, und/oder wenigstens eines weiteren Datensignals, insbesondere zur Steuerung und/oder Regelung des weiteren Betriebsmittels, zwischen der Steuereinheit und der weiteren Schnittstelle, auf. Die weitere Schnittstelle ist zur Kopplung mit einem weiteren Sicherheitssensor eingerichtet, um ein weiteres Sensorsignal zu erhalten. Die weitere Schnittstelle ist dazu eingerichtet, mittels der weiteren Übertragungsleitung und in Abhängigkeit von dem weiteren Sensorsignal ein weiteres Sicherheitssignal an die Steuereinheit zu übertragen.

Die Steuereinheit kann beispielsweise für jedes elektrische Betriebsmittel eine eigene Untersteuereinheit beinhalten. Die Untersteuereinheit kann dabei einen Umrichter, insbesondere einen Motorumrichter, oder ein Umrichtermodul für das jeweilige Betriebsmittel oder den jeweiligen Motor beinhalten. Besonders in Ausführungsformen, in denen die elektrische Anlage zwei oder mehrere elektrische Betriebsmittel aufweist, wirkt sich der reduzierte Verkabelungsaufwand aufgrund des verbesserten Konzepts besonders vorteilhaft aus.

Die Erläuterungen bezüglich des elektrischen Betriebsmittels können analog auf entsprechende Ausführungsformen des weiteren elektrischen Betriebsmittels übertragen werden.

Die Erfindung wird im Folgenden anhand konkreter Ausführungsbeispiele und zugehöriger schematischer Zeichnungen näher erläutert. In den Figuren sind gleiche oder funktionsgleiche Elemente mit gleichen Bezugszeichen versehen. Die Beschreibung gleicher oder funktionsgleicher Elemente wird gegebenenfalls nicht notwendigerweise in verschiedenen Figuren wiederholt.
- FIG 1: eine beispielhafte Ausführungsform einer elektrischen Anlage nach dem verbesserten Konzept;
- FIG 2: eine weitere beispielhafte Ausführungsform einer elektrischen Anlage nach dem verbesserten Konzept;
- FIG 3: eine weitere beispielhafte Ausführungsform einer elektrischen Anlage nach dem verbesserten Konzept;
- FIG 4: eine weitere beispielhafte Ausführungsform einer elektrischen Anlage nach dem verbesserten Konzept;
- FIG 5: eine weitere beispielhafte Ausführungsform einer elektrischen Anlage nach dem verbesserten Konzept; und
- FIG 6: eine weitere beispielhafte Ausführungsform einer elektrischen Anlage nach dem verbesserten Konzept.

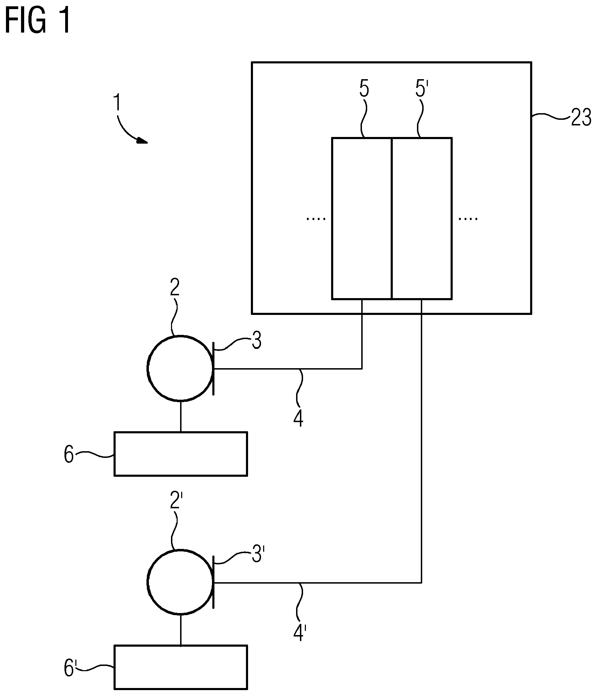

In FIG 1 ist ein Blockdiagramm einer beispielhaften Ausführungsform einer elektrischen Anlage 1 nach dem verbesserten Konzept gezeigt.

Die elektrische Anlage 1 weist ein elektrisches Betriebsmittel 2, beispielsweise einen elektrischen Motor, und eine Steuereinheit 5 zur Steuerung und/oder Regelung des elektrischen Betriebsmittels 2 auf. Dabei ist das elektrische Betriebsmittel 2 mit der Steuereinheit 5 über eine Übertragungsleitung 4 verbunden. Insbesondere weist die elektrische Anlage eine Schnittstelle 3 auf, welche die Übertragungsleitung 4 mit dem elektrischen Betriebsmittel 2 verbindet. Die Übertragungsleitung 4 dient insbesondere zur Übertragung elektrischer Leistung von der Steuereinheit 5 an das Betriebsmittel 2 und/oder zur Übertragung von Datensignalen zwischen der Steuereinheit 5 und dem elektrischen Betriebsmittel 2 beziehungsweise der Schnittstelle 3.

Die elektrische Anlage 1 weist außerdem einen Sicherheitssensor 6 auf, der mit dem Betriebsmittel 2, insbesondere der Schnittstelle 3, verbunden ist.

Der Sicherheitssensor 6 ist dazu eingerichtet, das Vorliegen eines sicherheitsrelevanten Ereignisses betreffend das elektrische Betriebsmittel 2 zu detektieren und abhängig davon ein Sensorsignal zu erzeugen und an die Schnittstelle 3 zu übermitteln. Die Schnittstelle 3 ist dazu eingerichtet, in Abhängigkeit von dem Sensorsignal ein Sicherheitssignal über die Übertragungsleitung 4 an die Steuereinheit 5 zu übertragen. Die Steuereinheit 5 ist insbesondere dazu eingerichtet, abhängig von dem Sicherheitssignal eine Sicherheitsmaßnahme einzuleiten, beispielsweise das elektrische Betriebsmittel 2 außer Betrieb zu setzen oder sicher zu stoppen.

Im Beispiel der FIG 1 ist ohne Beschränkung der Allgemeinheit ein optionales weiteres Betriebsmittel 2' gezeigt, sowie eine weitere Steuereinheit 5'. Die weitere Steuereinheit 5' ist mit dem weiteren Betriebsmittel 2' über eine weitere Übertragungsleitung 4' und eine weitere Schnittstelle 3' verbunden. Außerdem weist die Anlage einen optionalen zweiten oder weiteren Sicherheitssensor 6' auf, der mit dem weiteren Betriebsmittel 2', insbesondere der weiteren Schnittstelle 3', verbunden ist.

Die Steuereinheiten 5, 5' können auch als Untersteuereinheiten einer gemeinsamen Gesamtsteuereinheit betrachtet werden.

Die Ausführungen bezüglich des Betriebsmittels 2, der Schnittstelle 3, der Übertragungsleitung 4, der Steuereinheit 5 und des Sicherheitssensors 6 lassen sich analog auf das weitere Betriebsmittel 2', die weitere Schnittstelle 3', die weitere Übertragungsleitung 4', die weitere Steuereinheit 5' sowie den weiteren Sensor 6' übertragen.

Beispielsweise kann die Steuereinheit 5 und optional die Steuereinheit 5' in einem Schaltschrank 23 angeordnet sein. Der Schaltschrank 23 beziehungsweise die Steuereinheiten 5, 5' sind räumlich entfernt von den jeweiligen Betriebsmitteln 2, 2' angeordnet, wohingegen die Schnittstellen 3, 3' sowie die Sicherheitssensoren 6, 6' in unmittelbarer Umgebung zu dem jeweiligen Betriebsmittel 2, 2' angeordnet sind. Dadurch wird im Vergleich zu konventionellen Ansätzen ein Verkabelungsaufwand durch die kombinierte Nutzung der Übertragungsleitungen 4, 4' zur Übertragung der elektrischen Leistung und/oder des Datensignals und des Sicherheitssignals reduziert.

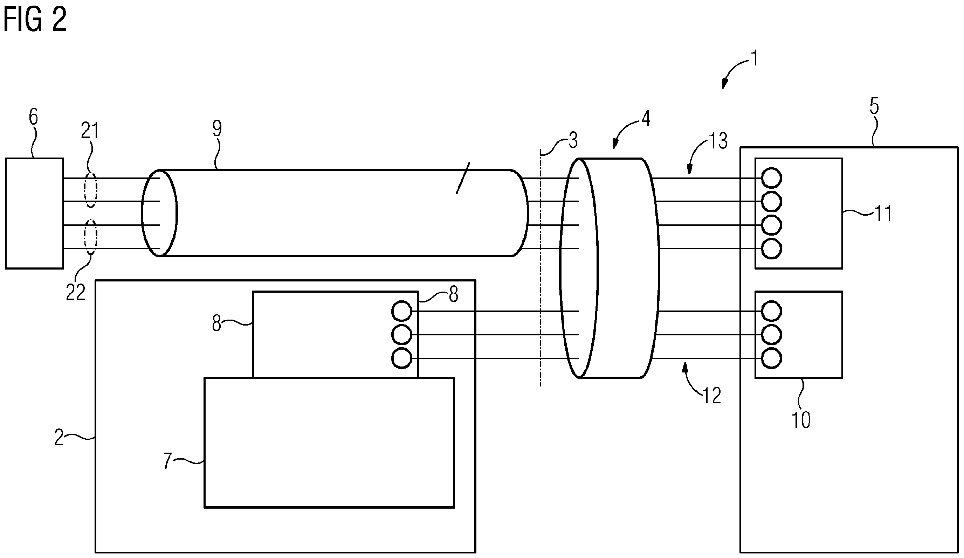

In FIG 2 ist ein Blockdiagramm einer weiteren beispielhaften Ausführungsform einer elektrischen Anlage 1 nach dem verbesserten Konzept gezeigt. Die elektrische Anlage der FIG 2 basiert auf der elektrischen Anlage der FIG 1, wobei der optionale Schaltschrank 23 sowie das optionale weitere Betriebsmittel 2', die weitere Schnittstelle 3', die weitere Übertragungsleitung 4', die weitere Steuereinheit 5' sowie der weitere Sicherheitssensor 6' nicht gezeigt sind.

Die Steuereinheit 5 weist beispielsweise einen Motorausgang 10 auf, mit dem erste Leiter 12 der Übertragungsleitung 4 zur Energieversorgung des Betriebsmittels 2 verbunden sind. Das Betriebsmittel 2 weist einen Motor 7 auf sowie einen Klemmkasten 8. Die ersten Leiter 12 sind mit dem Klemmkasten 8 zur Energieversorgung des Motors 7 verbunden.

Die Steuereinheit 5 weist außerdem Sicherheitseingänge 11 auf, beispielsweise vier Sicherheitseingänge 11, die mit zweiten Leitern 13 der Übertragungsleitung 4 verbunden sind.

Die Schnittstelle 3 wird beispielsweise durch einen Bereich der Leiter 12, 13 zwischen der Übertragungsleitung 4 und dem Klemmkasten 8 gebildet. Während die ersten Leiter 12 an dem Klemmkasten 8 enden, verlaufen die zweiten Leiter 13 beispielsweise über eine kurze geringe Strecke, insbesondere über eine Strecke von etwa einem oder unter einem Meter, mittels einer weiteren Leitung 9 an den Sicherheitssensor 6 übertragen, wo sie mit diesem verbunden sind.

Die zweiten Leiter 13 weisen beispielsweise wenigstens eine, insbesondere zwei, erste Adern auf, welche einen ersten Übertragungspfad 21 bilden sowie optional wenigstens eine, insbesondere zwei, zweite Adern, welche einen optionalen zweiten Übertragungspfad 22 bilden.

Der Sicherheitssensor 6 ist beispielsweise dazu eingerichtet, beim Vorliegen des sicherheitsrelevanten Ereignisses das Sicherheitssignal über den ersten Übertragungspfad 21 und die Schnittstelle 3 als Sicherheitssignal an die Sicherheitseingänge 11 der Steuereinheit 5 zu übertragen.

Optional kann der Sicherheitssensor 6 ein weiteres Sicherheitssignal, welches insbesondere redundant zu dem Sicherheitssignal erzeugt wurde, beispielsweise im Falle des sicherheitsrelevanten Ereignisses über den zweiten Übertragungspfad 22 und die Schnittstelle 3 als weiteres Sicherheitssignal an die Sicherheitseingänge 11 übertragen.

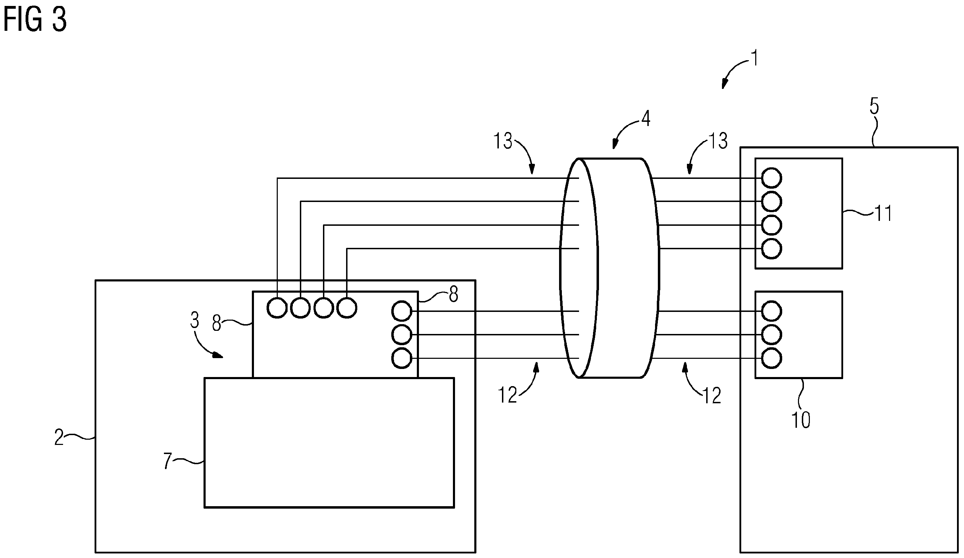

In FIG 3 ist ein Blockdiagramm einer weiteren beispielhaften Ausführungsform einer elektrischen Anlage 1 nach dem verbesserten Konzept gezeigt. Der Übersichtlichkeit halber ist der Sicherheitssensor 6 nicht dargestellt. Die Ausführung der FIG 3 basiert auf derjenigen der FIG 2.

Im Unterschied zur FIG 2 sind die ersten Leiter 13 jedoch nicht mit einer weiteren Leitung 9 sondern mit dem Klemmkasten 8 verbunden. Der Klemmkasten 8 stellt hier beispielsweise die Schnittstelle 3 dar. Der nicht gezeigte Sicherheitssensor 6 ist über den Klemmkasten 8 mit den ersten Leitern 13 verbunden oder gekoppelt.

Bezüglich der Funktionalität wird auf die Ausführungen zu FIG 2 verwiesen. Mit Vorteil wird nach der Ausführung der FIG 3 auch die weitere Leitung 9 vermieden.

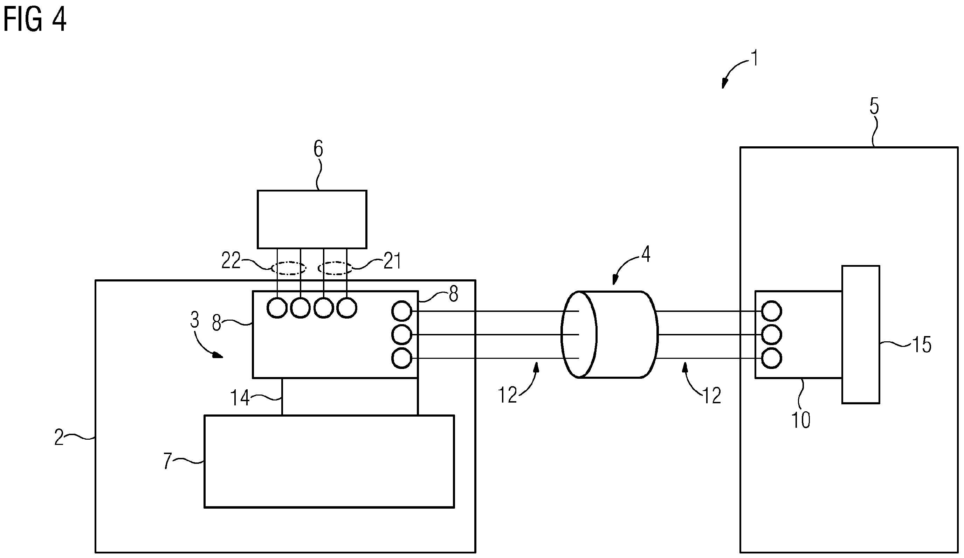

In FIG 4 ist ein Blockdiagramm einer weiteren beispielhaften Ausführungsform der elektrischen Anlage 1 gezeigt, welche auf FIG 1 basiert.

Bezüglich des Motors 7, der Motorausgänge 10 und des Klemmkastens 8 wird auf die Ausführungen zu FIG 2 und FIG 3 verwiesen. Im gezeigten Beispiel der FIG 4 weist die Übertragungsleitung jedoch keine separaten zweiten Leiter 13 zur Übertragung des Sicherheitssignals auf.

Die Schnittstelle 3 enthält neben dem Klemmkasten 8 auch einen Kommunikationsschaltkreis 14. Der Kommunikationsschaltkreis 14 ist dazu eingerichtet, ein Signal zur Übertragung der elektrischen Leistung mittels des ersten Leiters 12 entsprechend des Sensorsignals und/oder des weiteren redundanten Sensorsignals zu modulieren, um das Sicherheits-signal zu erzeugen und mittels der ersten Leiter 12 an die Motorausgänge 10, welche in diesem Beispiel auch als Sicherheitseingänge dienen, zu übertragen. Die Steuereinheit 5 weist einen weiteren Kommunikationsschaltkreis 15 auf, der dazu eingerichtet ist, das modulierte Signal zu demodulieren um das Sicherheitssignal und/oder das weitere Sicherheitssignal zu erhalten.

In solchen Ausführungsformen kann vorteilhafterweise auch auf die zweiten Leiter 13 verzichtet werden. Außerdem kann die Übertragung des Sicherheitssignals mittels der Kommunikationsschaltkreise 14, 15 auf einem sicheren Protokoll zur sicheren Datenübertragung beruhen.

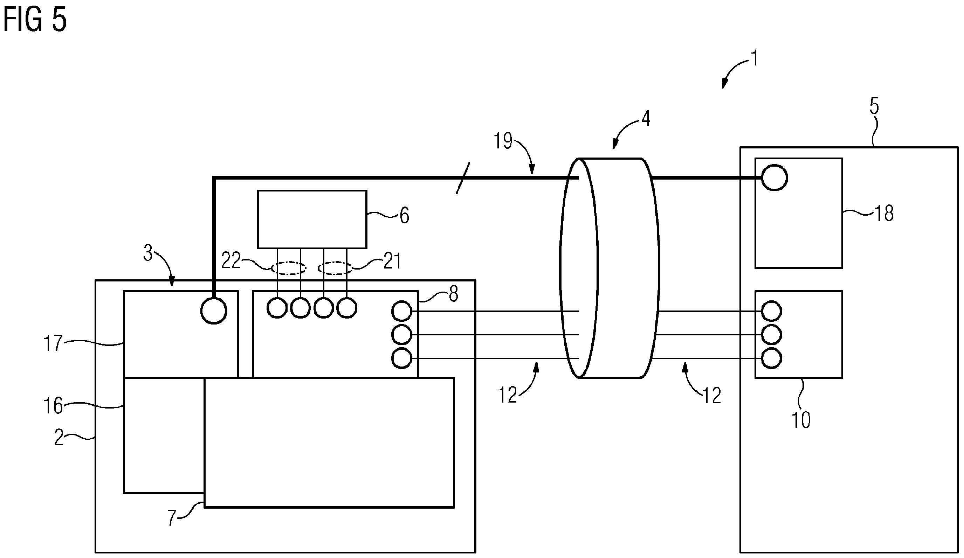

In FIG 5 ist ein Blockdiagramm einer weiteren beispielhaften Ausführungsform der elektrischen Anlage 1 nach dem verbesserten Konzept gezeigt, welche auf FIG 1 beruht.

Bezüglich des Motors 7, des Klemmkastens 8, der Motorausgänge 10 des ersten Leiters 12 wird auf die Ausführungen von FIG 1 bis FIG 4 verwiesen.

Im Beispiel der FIG 5 weist das Betriebsmittel 2 einen Geber 16 auf, der mit dem Motor 7 verbunden ist, um eine Position des Motors 7 oder einer Motorwelle des Motors 7 zu erfassen und basierend auf der erfassten Position mittels eines Geberanschlusses 17 des Betriebsmittels 2 ein Gebersignal zu erzeugen. Die Schnittstelle 3 wird hier beispielsweise durch oder zusätzlich durch den Geberanschluss 17 gebildet.

Der Geberanschluss 17 ist beispielsweise mit einem Kommunikationsbus 19 der Übertragungsleitung 4 verbunden. Der Kommunikationsbus 19 ist beispielsweise mit einem Gebereingang 18 der Steuereinheit 5 verbunden. Das Gebersignal wird von dem Geberanschluss 17 über den Kommunikationsbus 19 an den Gebereingang 18 übermittelt. Die Steuereinheit ist dazu eingerichtet, abhängig von dem Gebersignal den Motor 7 zu steuern.

Der Sicherheitssensor 6 ist, wie bezüglich FIG 4 beschrieben mit dem Klemmkasten 8 verbunden, welcher wiederum mit dem Geberanschluss 17 verbunden ist. Der Geberanschluss 17 ist dazu eingerichtet, über den Kommunikationsbus 19 die von dem Sicherheitssensor 6 erzeugten Sensorsignale als Sicherheitssignale an den Gebereingang 18 zu übertragen oder abhängig von den Sensorsignalen das Gebersignal zu modulieren, um das Sicherheitssignal zu erzeugen und zu übertragen.

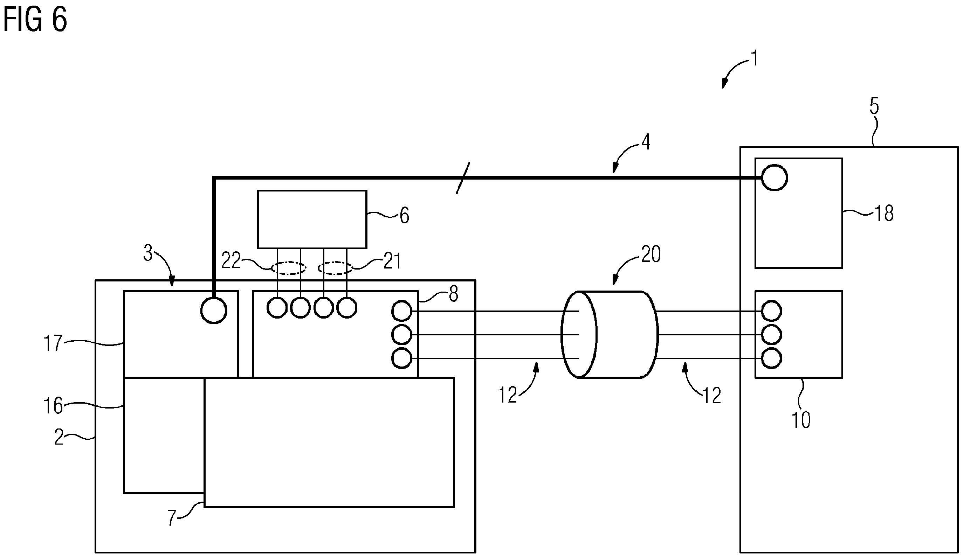

In FIG 6 ist ein Blockdiagramm einer weiteren beispielhaften Ausführungsform einer elektrischen Anlage nach dem verbesserten Konzept gezeigt, welche auf der Ausführungsform von FIG 5 beruht.

Die Ausführungsform der FIG 6 unterscheidet sich von derjenigen der FIG 5 dadurch, dass die Übertragungsleitung 4 die ersten Leiter 12 zur Übertragung der Leistung von der Steuereinheit 5 an den Klemmkasten 8 nicht enthält. Die ersten Leiter 12 sind stattdessen von einer Leistungs-Übertragungsleitung 20 beinhaltet, die mit dem Klemmkasten 8 und dem Motorausgang 10 verbunden ist.

Gemäß dem verbesserten Konzept werden verbesserte Varianten und/oder Topologien zum lokalen Anschluss von Sicherheitssensoren angegeben.

Durch das verbesserte Konzept können separate Leitungen zur Übertragung des Sicherheitssignals vermieden und ein entsprechender Verkabelungsaufwand für die elektrische Anlage reduziert werden.

Dadurch können insbesondere Kosten für Montage, Verkabelung in den Schaltschrank, Inbetriebnahme und Wartung eines weiteren Geräts und/oder Spannungsversorgung des weiteren Geräts reduziert werden oder entfallen. Außerdem kann gegebenenfalls das weitere Gerät eingespart werden, sodass sich ein Risiko des Anlagenstillstands durch Ausfall des entsprechenden Geräts reduzieren lässt.

Außerdem kann ein Risiko eines Anlagenstillstands durch Kabelbruch aufgrund der reduzierten Anzahl von Leitungen ebenfalls reduziert werden.

Insbesondere bei Verwendung von sicheren Übertragungsprotokollen zur Übertragung des Sicherheitssignals kann beispielsweise auf mechanische Sicherungen, beispielsweise durch Panzerrohre, einer Verdrahtung des Sicherheitssensors verzichtet werden oder eine im Vergleich zu der mechanischen Sicherung erhöhte Sicherheit erreicht werden.

## Patentansprüche

1. Elektrische Anlage mit
einem elektrischen Betriebsmittel (2), einer an dem Betriebsmittel (2) angeordneten Schnittstelle (3); und
einer mit der Schnittstelle (3) verbundenen Übertragungsleitung (4) zur Übertragung von elektrischer Leistung und/oder wenigstens eines Datensignals zwischen einer Steuereinheit (5, 5') und der Schnittstelle (3);
**dadurch gekennzeichnet, dass** die Schnittstelle (3) zur Kopplung mit einem Sicherheitssensor (6) eingerichtet ist, um ein Sensorsignal zu erhalten; und
die Schnittstelle (3) dazu eingerichtet ist, mittels der Übertragungsleitung (4) und in Abhängigkeit von dem Sensorsignal ein Sicherheitssignal an die Steuereinheit (5, 5') zu übertragen.

2. Elektrische Anlage nach Anspruch 1,
**dadurch gekennzeichnet, dass** die Übertragungsleitung (4) wenigstens einen ersten Leiter (12) zur Übertragung der elektrischen Leistung enthält; und
wenigstens einen zweiten Leiter (13) zur Übertragung des Sicherheitssignals enthält.

3. Elektrische Anlage nach Anspruch 1,
**dadurch gekennzeichnet, dass** die Übertragungsleitung (4) wenigstens einen ersten Leiter (12) zur Übertragung der elektrischen Leistung enthält; und
die Schnittstelle (3) dazu eingerichtet ist, in Abhängigkeit von dem Sensorsignal ein Signal zur Übertragung der Leistung zu modulieren um das Sicherheitssignal mittels des wenigstens einen ersten Leiters (12) zu übertragen.

4. Elektrische Anlage nach Anspruch 1,
**dadurch gekennzeichnet, dass** die Übertragungsleitung (4) wenigstens einen dritten Leiter zur Übertragung des wenigstens einen Datensignals aufweist; und
die Schnittstelle (3) dazu eingerichtet ist, in Abhängigkeit von dem Sensorsignal das wenigstens eine Datensignal zu modulieren, um das Sicherheitssignal mittels des wenigstens einen dritten Leiters zu übertragen.

5. Elektrische Anlage nach Anspruch 4,
**dadurch gekennzeichnet, dass** die Übertragungsleitung (4) einen Kommunikationsbus (19) aufweist, welcher den wenigstens einen dritten Leiter enthält.

6. Elektrische Anlage nach einem der Ansprüche 4 oder 5,
**dadurch gekennzeichnet, dass** das Betriebsmittel (2) einen elektrischen Motor (7) und einen Geber (16) für den Motor (7) enthält;
der wenigstens eine dritte Leiter mit einem Geberanschluss (17) des Motors (7) oder des Gebers (16) verbunden ist; und das wenigstens eine Datensignal ein von dem Geber (16) oder dem Geberanschluss (17) erzeugbares Gebersignal enthält.

7. Elektrische Anlage nach einem der Ansprüche 4 bis 6,
**dadurch gekennzeichnet, dass** die Übertragungsleitung (4) wenigstens einen ersten Leiter (12) zur Übertragung der elektrischen Leistung enthält.

8. Elektrische Anlage nach einem der Ansprüche 4 bis 6,
**dadurch gekennzeichnet, dass** die elektrische Anlage (1) eine mit dem Betriebsmittel (2) verbundene Leistungsübertragungsleitung (20) zur Übertragung der elektrischen Leistung aufweist.

9. Elektrische Anlage nach einem der Ansprüche 1 bis 8,
**dadurch gekennzeichnet, dass** die Schnittstelle (3) einen Kommunikationsschaltkreis (14) aufweist, der dazu eingerichtet ist, das Sicherheitssignal gemäß einem vorgegebenen Kommunikationsprotokoll zu erzeugen und zu übertragen.

10. Elektrische Anlage nach einem der Ansprüche 1 bis 9,
**dadurch gekennzeichnet, dass** die elektrische Anlage (1) zur Kopplung der Schnittstelle (3) mit dem Sicherheitssensor (6) einen ersten Übertragungspfad (21) aufweist, um das Sensorsignal zu erhalten; und
einen zweiten Übertragungspfad (22) aufweist, um ein weiteres Sensorsignal zu erhalten, welches redundant zu dem Sensorsignal ist.

11. Elektrische Anlage nach einem der Ansprüche 1 bis 10
**dadurch gekennzeichnet, dass** die elektrische Anlage (1) die Steuereinheit (5, 5') enthält; und
die Steuereinheit (5, 5') dazu eingerichtet ist, in Abhängigkeit von dem Sicherheitssignal eine Sicherheitsmaßnahme einzuleiten.

12. Elektrische Anlage nach einem der Ansprüche 1 bis 11,
**dadurch gekennzeichnet, dass** die Anlage (1) den Sicherheitssensor (6) beinhaltet; und
der Sicherheitssensor (6) dazu eingerichtet ist, ein sicherheitsrelevantes Ereignis zu erkennen und abhängig davon das Sensorsignal zu erzeugen.

13. Elektrische Anlage nach Anspruch 12,
**dadurch gekennzeichnet, dass** der Sicherheitssensor (6) einen Not-Halt Taster aufweist; und/oder
einen Positionsschalter aufweist, der an dem Betriebsmittel (2) angeordnet ist, um eine Position einer Komponente des Betriebsmittels (2) zu detektieren; und/oder
einen Stromsensor aufweist, der einen Strom des Betriebsmittels (2) detektieren kann; und/oder
einen Spannungssensor aufweist, der eine Spannung des Betriebsmittels (2) detektieren kann; und/oder
einen Temperatursensor aufweist, der eine Temperatur des Betriebsmittels (2) detektieren kann; und/oder
einen Kraftsensor aufweist, der eine Kraft detektieren kann, die von oder auf eine Komponente des Betriebsmittels (2) ausgeübt wird; und/oder
einen Drehmomentsensor aufweist, der ein Drehmoment detektieren kann, das von oder auf eine Komponente des Betriebsmittels (2) ausgeübt wird; und/oder
einen optischen Sensor aufweist, um einen Bereich oder eine Umgebung des Betriebsmittels (2) zu überwachen; und/oder
einen akustischen Sensor aufweist, um ein Betriebsgeräusch des Betriebsmittels (2) zu überwachen und/oder ein Fehlergeräusch des Betriebsmittels (2) zu detektieren.

14. Elektrische Anlage nach einem der Ansprüche 1 bis 13,
**dadurch gekennzeichnet, dass** die elektrische Anlage (1) ein weiteres elektrisches Betriebsmittel (2') aufweist sowie eine an dem weiteren Betriebsmittel (2') angeordnete weitere Schnittstelle (3'); und
eine mit der weiteren Schnittstelle (3') verbundene weitere Übertragungsleitung (4') zur Übertragung von elektrischer Leistung und/oder wenigstens eines weiteren Datensignals zwischen der Steuereinheit (5, 5') und der weiteren Schnittstelle (3') aufweist;
die weitere Schnittstelle (3') zur Kopplung mit einem weiteren Sicherheitssensor (6') eingerichtet ist, um ein weiteres Sensorsignal zu erhalten; und
die weitere Schnittstelle (3') dazu eingerichtet ist, mittels der weiteren Übertragungsleitung (4') und in Abhängigkeit von dem weiteren Sensorsignal ein weiteres Sicherheitssignal an die Steuereinheit (5, 5') zu übertragen.
